# EUROPEAN PATENT APPLICATION

(11) **EP 4 254 116 A1**
(43) Date of publication of application: **04.10.2023**
(21) Application number: 22202666.8
(22) Date of filing: 20.10.2022
(51) Int. Cl.: G05D 1/00, G06N 7/01, G06Q 10/047, G08G 5/00

(54) **PROBABILISTIC MISSION DESIGN**

(30) Priority: 31.03.2022 EP 22166062
(71) Applicant: Honda Research Institute Europe GmbH, 63073 Offenbach/Main (DE)
(72) Inventor: FLADE, Benedict, 63073 Offenbach (DE); PUPHAL, Tim, 63073 Offenbach (DE); KOHAUT, Simon, 65936 Frankfurt am Main (DE)
(74) Representative: Beder, Jens

(57) **Abstract**

The present invention relates to a system for evaluating a mission of a mobile entity. The system comprises a means for obtaining information on a planned trajectory, the mobile entity, mission requirements, environment and public body rules, a means (3..5) for transforming the information into a symbolic, probabilistic representation to generate a probabilistic logic program, wherein facts are extracted from the information and systematically designated with names within the probabilistic logic program, and a means (6) for generating an answer to the a probabilistic logic query based on the probabilistic logic program.

## Description

The invention is in the field of mission design for unmanned aerial vehicles and other mobile entities. In particular, the invention relates to a method and system for evaluating a mission of a mobile entity and a computer program product.

Mission analysis via environment and task visualization is crucial to safe and reliable operations. US 8 164 485 B2 discloses a system for aiding pilot preview and providing real-time visual acquisition of flight mission progress. Grounded in the field of air traffic management, this system aims to improve flight safety by enabling operators to get a better situational understanding and awareness for obstacles by rendering the intended trajectory and environment. By granting insight into the mission from various orientations and viewing angles, operators can react to threats that were either not sufficiently taken into account at mission initiation or that are hidden from the pilot's attention. US 8 164 485 B2 tackles the problem that a significant number of accidents happens while there is still control over the agent (e.g., airplane). It thereby shares a goal to enhance mission analysis by providing an intuitive interface to the operator. However, the system is limited to a passive, visual representation of environment and trajectory knowledge without granting further symbolic reasoning or control. Further, 2D and 3D representations of the mission environment is not provided, operator and public body rules and preferences will not influence the resulting visualization and even automatic responses to threats or rule violations are not possible.

To carry out a given mission, spatio-temporal planning needs to be performed to obtain the actual trajectory from start to finish. US 9 488 441 B2 discloses a method, in which a mission is optimized by defining and solving a constrained optimization problem. While mathematically stated constraints can represent rules and limitations set by a public body, the optimization problem needs to be compatible to numeric solvers and will be non-transparent to users and impossible to adjust for non-experts. Thereby, legislative changes or unforeseen operator preferences cannot be matched by such techniques.

US 2020/0105149 A1 discloses a management method for unmanned aerial vehicles, in which a fight plan describing a mission is enhanced under consideration of a set of conditions. The method is rule-based and allows for a description how the agent is conducting its mission. However, the method is limited to a pre-defined graph and follows the idea of dividing a route into sub-routes with sub-goals. This means that specific paths or missions are not validated. Instead, sub-paths are exchanged under consideration of alternative plans and conditions, which requires a behavior tree and needs to be defined beforehand. US 2020/0105149 A1 does not address the problem of specifying the conditions that would trigger a flight plan to get clearance and to further analyze the navigation environment.

US 7 979 199 B2 discloses a system that evaluates intended missions based on a clearance signal to the agent, wherein each new route generated by the agent's motion planner triggers a clearance request to the operator. This is the case when new information, e.g., a new weather forecast, is available and a new route is deemed to be advantageous in comparison to the current plan. Once the clearance request was dispatched, an operator is manually evaluating the newly proposed route and returns manual feedback. However, manual feedback is required, quick and transparent adaptions to the underlying decision-making process are not possible, and rules and preferences cannot be predefined by non-experts to reflect both the will of a public body and the operator itself.

US 10 332 405 B2 discloses an automated air traffic control system for unmanned air vehicles with autonomous planning of the agent to which clearance is granted or denied in a separate step. However, the system is not transparent in decision making, not adaptive, and not able to handle complex boundary conditions and make classifications (e.g., clearance or no clearance) based on knowledge and rules.

Since the reformation of air traffic management (with remotely piloted aircraft systems (RPAS) being a crucial and challenging component) is still in the making, reflecting on the fact that rules are still unclear and unpredictable, a dynamic and adaptable system is required.

It is an object of the present invention to provide a method and system, which reduce the above problems. In particular, an object of the present invention is to provide a computer program product, a logically intuitive and transparent method and system that solve mission-related queries and that can be used and adapted by non-experts within the context of mission design problems.

This object is achieved by a method and a system according to the enclosed independent claims. Advantageous features of the present invention are defined in the corresponding dependent claims.

According to the present invention, a method for evaluating a mission of a mobile entity, comprises the steps of
- obtaining information on a planned trajectory, the mobile entity, mission requirements, environment and public body rules,
- transforming the information into a symbolic, probabilistic representation to generate a probabilistic logic program, wherein facts are extracted from the information and systematically designated with names within the probabilistic logic program,
- obtaining at least one probabilistic logic query on the mission and
- generating an answer to the at least one probabilistic logic query based on the probabilistic logic program.

The method can be a computer-implemented method and/or the mobile entity can be an unmanned aerial vehicle (e.g., drone), an automotive vehicle (e.g., autonomous driving car), vessel, an indoor or outdoor robot (e.g., lawn mower) with and without the need for an operator.

With the present invention, logic programming is applied to the mission design, wherein the logic program is a set of sentences in logical form, expressing facts and rules about some problem domain (mission design) and uses framework of a logic to specify and perform computation. Logic program assembler forms logic from knowledge, i.e., the obtained information, by representing knowledge as propositions and first order logic clauses, representing probabilistic data as distributions to sample from and generating probabilistic logic code from retrieved information.

The information on the planned trajectory and/or the mobile entity can be obtained from an agent unit, wherein the information on the planned trajectory can include a spatio-temporal representation of the planned trajectory and/or information on an uncertainty along the planned trajectory and the information on the mobile entity can include hardware specification, sensor data and/or information on measurements made by the mobile entity.

The at least one probabilistic logic query can be obtained from the agent unit, wherein the answer being sent to at least the agent unit.

The information on the environment can be obtained from a source for public information and can include weather conditions, geographic and/or topological information.

The information on the public body rules can be obtained from a source of information on rules set by a public body and can include legislative rules and/or regulations to be complied with.

The information on the mission requirements can be obtained from an operator unit and can include operator rules and mission requirements.

The probabilistic logic query can be obtained from the operator unit, wherein the answer being sent to at least the operator unit.

The probabilistic logic program can be a combination of a first logic program generated based on the information on the planned trajectory and the mobile entity, a second logic program generated on the information on the environment, a third logic program generated on the information on the mission requirements.

Probabilistic logic query resolution may include at least one of the following steps:
1. Knowledge retrieval
   - Obtain agent's planned trajectory, hardware specification and perception of environment,
   - Obtain public information, e.g., geography, weather fields and zoning,
2. Logic program assembly
   - Represent knowledge as first order logic clauses
   - Represent probabilistic data as distributions
   - Generate probabilistic logic code
3. Knowledge base augmentation
   - Retrieve current rules and definitions of public body
   - Retrieve operator rules and mission requirements/intentions
   - Attach rules and requirements to logic program, und
4. Query resolution
   - Apply resolution algorithm to answer query
   - Return query result to pilot, mobile entity, operator or public body

The first, second and/or third step can be started as soon as a query is received from any user of the system (pilot, public entity or operator). Alternatively, the first, second and/or third step can be started before the query has been entered, e.g., when (new) data regarding knowledge, rules, requirements, intentions and definitions is provided.

The program according to the present invention causes, when running on a computer or loaded onto a computer, the computer to execute the steps of:
- obtaining information on a planned trajectory, the mobile entity, mission requirements, environment and public body rules,
- transforming the information into a symbolic, probabilistic representation to generate a probabilistic logic program, wherein facts are extracted from the information and systematically designated with names within the probabilistic logic program,
- obtaining at least one probabilistic logic query on the mission and
- generating an answer to the at least one probabilistic logic query based on the probabilistic logic program.

According to the present invention, a system for evaluating a mission of a mobile entity comprises a means for obtaining information on a planned trajectory, the mobile entity, mission requirements, environment and public body rules, a means for transforming the information into a symbolic, probabilistic representation to generate a probabilistic logic program, wherein facts are extracted from the information and systematically designated with names within the probabilistic logic program and the obtaining means is configured to obtain at least one probabilistic logic query on the mission, and a means for generating an answer to the at least one probabilistic logic query based on the probabilistic logic program.

The obtaining means can comprise an agent unit configured to provide the information on the planned trajectory and the mobile entity, to generate the at least one probabilistic logic query and to control the mobile entity based on the answer, and/or the obtaining means can comprise an interface configured to receive the provided information and the at least one probabilistic logic query from the agent unit and to send the answer to the agent unit. The information on the planned trajectory can include a spatio-temporal representation of the planned trajectory and/or information on an uncertainty along the planned trajectory, and the information on the mobile entity can include hardware specification, sensor data and/or information on measurements made by the mobile entity.

Alternatively or in addition, the obtaining means can comprise a storage device for storing the information on the environment and/or can comprise an interface for receiving the information on the environment from the storage means. The information on the environment can include weather conditions, geographic and/or topological information.

Alternatively or in addition, the obtaining means can comprise a storage means for storing the information on the public body rules and/or can comprise an interface for receiving the information on the public body rules. The information on the public body rules can include legislative rules and/or regulations to be complied with.

Alternatively or in addition, the obtaining means can comprise an operator unit configured to generate the information on the mission requirements and the at least one probabilistic logic query based on an operation of a user and to output the answer to the user, and/or can comprise an interface to receive the generated information and the at least one probabilistic logic query from the operator unit and to send the answer to the operator unit. The information on the mission requirements can include operator rules and mission requirements.

The transformation means can be configured to generate a logic program based on the information on the planned trajectory and the mobile entity and to attach the information on the environment and the information on the mission requirements to the logic program to generate the probabilistic logic program.

The system and/or any of the functions described herein may be implemented using individual hardware circuitry, using software functioning in conjunction with at least one programmed microprocessor, a general-purpose computer, using an application specific integrated circuit (ASIC) and using one or more digital signal processors (DSPs). The storage means, in which the public body rules are stored and the storage means, in which the environment (public) information is stored can be separate storage devices located at different locations or a single storage device.

The system according to the present invention provides intuitive, probabilistic classification to answer mission design related questions. Here, the system is able to solve mission-related queries based on a pre-defined pool of components, i.e., symbolic knowledge and relations, and can be utilized as a service by an agent, its operator or a governing public body. Acting on relational level, it holistically combines various aspects of mission design under a single structured approach and works end to end.

The present invention introduces a system based on probabilistic logic to leverage agent and operator perception, knowledge and intentions together with public body rules for enhancing the navigation and mission design task. More specifically, the system fuses knowledge from various sources from manufacturer up to public body level to provide query-based analysis tools and automated clearance. By employing probabilistic logic, structures and parameters are transparent, have explicit meaning and can be changed at any time. As an example, the probability distribution of bad weather conditions and whether an agent is allowed to execute a task would be explicitly entangled knowledge or rules rather than the input and output of a black-box model. Furthermore, the system can operate in reverse mode by determining a most probable explanation (MPE), e.g., solving the question of the most probable cause of a denied mission clearance.

The queries themselves can include background knowledge and introduce new symbols to the system to reflect the operator's intentions, self-assigned rules, preferences, and boundary conditions. Analyzing multiple query results then allows for gaining spatio-temporal insight into the space of valid missions, motion planning options, and possible modes of operation. More specifically, queries can result in a landscape of valid target locations given the system's underlying knowledge base and motion planning choice.

In summary, a technical system for mission design is provided that is a) transparent in the decision-making, b) adaptable while being able to handle complex mission conditions (e.g., limits and boundaries of a mission), and c) providing classifications (e.g., clearance or no clearance) based on knowledge and rules.

Embodiments of the invention are discussed in detail with reference to the enclosed figures, in which
Fig. 1 shows a schematic of a system according to an embodiment of the present invention,
Fig. 2 shows a landscape that describes the validity of target locations based on the current UAV position (D) and an emergency site (E) generated by the system shown in Fig. 1,
Fig. 3 a simplified flow chart to illustrate the main method steps according to the present invention,
Figs. 4a, 4b examples of probabilistic landscapes, and
Fig. 5 shows a graphical user interface.

A mission can be the mere movement of the mobile entity (agent) to a particular location or, for example, the measurement of the temperature at that location at a predetermined time by the mobile entity and the return to the initial location. The trajectory or trajectories for the mission are determined based on at least geographic data and possibly the predetermined time.

In this context, a mission can be seen as a chain of tasks that lead to the fulfillment of a predetermined goal. As an example, a common drone application (mission) is to scan the roof of a building for analyzing its thermal properties or when planning the installation of an array of photovoltaic panels. For this mission, the individual tasks could be the initial vertical ascend, horizontal travel to the roof, area scanning and subsequent return to the operator or a landing pad. Of course, since such applications are within public spaces, sometimes directly over or in the vicinity of bystanders, special care needs to be taken to define safe limitations of the drones' maneuvers.

When designing a mission, aspects such as mission objective (what is it about), mission operator and participants (who is planning and performing actions), mission environment (where is the mission situated) and mission conditions (which laws, regulations and preferences apply) are of concern. In this context, it is increasingly important to steer away from black-box systems with complex interfaces to avoid non-transparent or biased decisions. A crucial step towards this goal is the development of an automated technical system with intuitive human-machine-interfaces that lead to human-interpretable outputs. Such system is especially valuable in novel or complex environments with varying or yet to be decided regulations. As an example, such is the case of rising traffic management systems for unmanned aircraft systems (UTM) like U-Space, a drone operation that is under development in Europe.

In the following, the term mission design is used to cover the areas of mission clearance, mission analysis and mission optimization, wherein mission clearance answers the question if a mission can be executed as defined by the autonomous agent or its operator. Clearance requests can hereby stem from the autonomous agent itself as well as the pilot or a public body that is governing the traversed environment. The mission analysis is about informing the agent or its operator on important features of past, ongoing and future missions. For this, a multitude of information sources needs to be consulted and fused with knowledge about the mission itself, the agent's perception, motion and interactions with the environment. The mission optimization serves to adapt parameters in order to improve the mission with respect to a predefined goal or objective function. In an iterative fashion, mission optimization can be coupled with clearance and analysis to propose valid and efficient missions based on the available data.

For the system according to the present invention to fulfil the aforementioned requirements and to introduce novel aspects to mission design, hybrid probabilistic logic programming is used. Not only is logic programming a more intuitive representation for knowledge and relations, it grants one the ability to quickly change a model of the world as well as its rules to reflect changes in, e.g., legislative or personal rules. Over the last decade, probabilistic logic programming has evolved to accommodate both discrete and continuous, i.e., hybrid, probability distributions. Thereby, it has evolved to become a promising method to enhance the navigation and mission design task. Since present invention is especially concerned about transparency, adaptability and in reflecting the probabilistic nature and knowledge about the navigation space, related methods with a focus on these attributes are discussed below.

First, there are graphical models, which share the characteristic of encoding probability distributions. Among graphical models, Bayesian Networks, Markov Networks and Factor Graphs are the most commonly named instances. Regardless of the specific type of graphical model, a joint probability distribution is encoded. Based on the graph's structure and learned probabilities, probabilistic inference algorithms can answer questions regarding the Boolean or numeric values of the incorporated random variables.

Usually, one would compute marginal probabilities, maximum a posteriori or most probable explanations given available evidence. Thereby, graphical models are suitable tools to solve a subset of the problem space, such as giving mission clearance based on the probability of a mission being legal given the agents planned trajectory and knowledge about the environment. However, such models are rigid in their structure and parameters since one needs to derive them from big data sources, so new missions, laws or operator preferences with new variables require the model to be updated by an expert using machine learning technologies. In contrast, probabilistic logic programs are more flexible, since each rule is just a chain of other rules and symbols that are required to be evaluated to be (probably) true. With the present invention, introducing new symbols or rules is therefore much easier and could even be conducted by non-experts, especially if given a graphical interface to do so. Since graphical models need to be evaluated as a whole, there are also performance gains to be expected since a logical rule can be evaluated early if a required sub-rule is found to be violated. This also relates to the fact that rules and knowledge in logic programming can be evaluated separately, allowing public, manufacturer and operator rule compliance to be computed on their own or even on separate devices. On an abstract level, the invention defines a novel framework enabled by the use of hybrid probabilistic logic programming in a navigation setting.

To enable agents to plan a route within given public or private mission conditions (e.g., restrictions, regulations, boundary conditions or preferences), it is important to discuss the broad field of constrained optimization techniques. Here, a numeric description of the cost of flying a given trajectory as well as soft and hard requirements are designed by experts to automatically evaluate a cost-minimized route. In the field of Reinforcement Learning, this is usually formulated as a Markov Decision Problem where a reward function has to be maximized. In any case, such methods could similarly represent laws and preferences directly in the planning step within the agent. But, similarly to the case of graphical models, mostly experts are able to introspect, understand and adapt such concepts to new requirements. More critically, cost and reward functions as well as the given constraints need to be compatible with the employed numeric solvers to lead to acceptable results. With the present invention, probabilistic logic is used to take in preplanned routes from the agent to check more dynamically and transparently for rule compliance. Given the programmatic nature of probabilistic logic, changing these rules is straightforward and does not underlie harsh mathematical constraints. A notable existing application of probabilistic logic programming is relational planning, where a Markov Decision Process is being solved leveraging the symbolic nature of logic. However, the invention is as stated not (only) aiming at the planning task itself but to tackle more high-level mission design tasks and analysis by interlacing planning, perception, probabilistic models and background knowledge with changing manufacturer, public and operator requirements.

Finally, another cluster of techniques aimed towards probabilistic inference and classification suitable for mission design tasks revolves around the use of potent function approximators, namely (deep) neural networks. In neural networks, learned information is stored in weights of anonymous edges between nodes that non-linearly transform their input to approximate a target function. For one thing, neural networks have, given they are large enough, the potential to model any function, then again they require massive amounts of data points to appropriately sample the target functions domain. Although methods for online training exist that allow the model to be adapted to new situations, unsupervised changes to the model could induce unintentional or even unsafe new behaviour. Therefore, neural networks can be regarded as similarly rigid as graphical models since automatic adaptations may often be deemed unacceptable in safety critical environments. In contrast to using function approximators for inference tasks, the model according to the present invention is human-readable and parameters have explicit meaning. Furthermore, similarly to graphical models, logic programming enables many queries on the given set of variables rather than the single input-output-behaviour of, e.g., neural networks. Since neural networks have to be trained using optimization methods, one needs to deal with optimization related, mathematical constraints such as the existence of local optima, non-convex and indifferentiable spaces in the target function. Such problems do not occur in probabilistic logic, since optimization and parameter learning is not required because the program structure is explicitly given by operators, manufacturers and the public body.

The system according to the invention takes agent-provided information such as planned routes, perception, and hardware specifications and interlaces it with public data, user preferences and public rules. More specifically, public rules, as provided by legislative frameworks as U-Space, are connected to personal preferences in order to design, clear or analyze a mission. Thereby, the goal is to obtain a logically intuitive and transparent technical system that can be used and adapted by non-experts within the context of mission design problems. Since rules and preferences are provided as automatically evaluable logic programs, a central service or the agent itself can check for rule compliance and success probabilities without the need for operator interference. Here, agent is to be understood as a generalization over, e.g., unmanned aerial vehicles, automotive vehicles, vessels and indoor robots with and without the need for an operator.

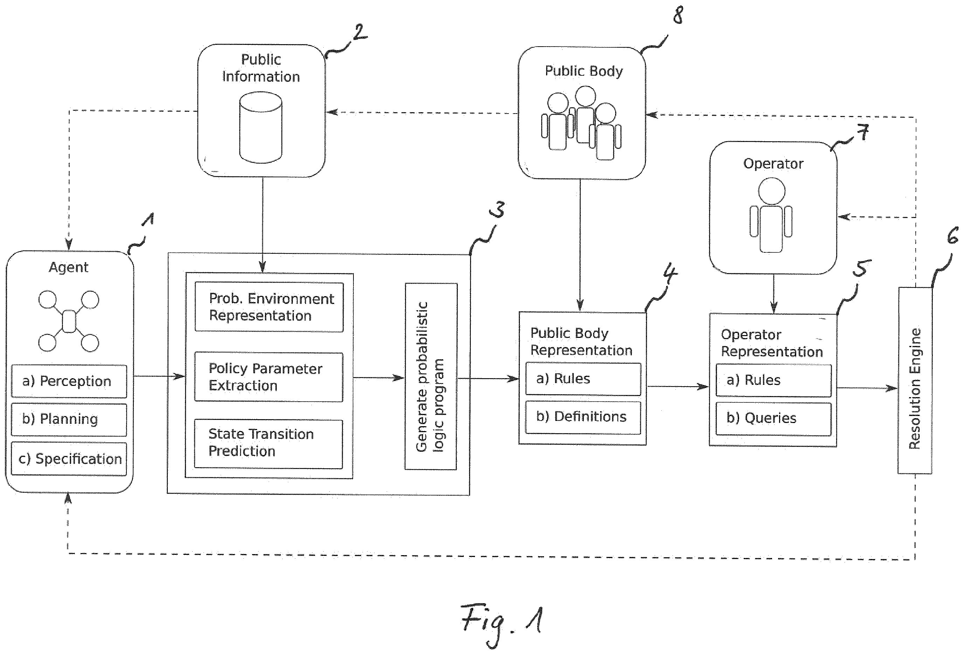

Fig. 1 shows a block diagram of a system according to an embodiment of the present invention. The system comprises eight components and their (optional, if represented by dashed arrow) wired or wireless connections. It is important to mention that these components are not implied to be situated on a single hardware and could be distributed over multiple individual instances. Furthermore, the shape of the blocks in Fig. 1 indicates whether the corresponding component is provided as part of the implementation of the invention (sharp corners) or a component (rounded corners) that can be provided by a third party, such as the manufacturer, and connected to the system as an external component via an interface of the system. All information mentioned flowing from one component to another can be either boolean, i.e., true or false, numeric deterministic or the parameters to a distribution describing the probability density of the respective variable.

The system shown in Fig. 1 comprises the following components: an agent unit 1, a data source for public information 2, logic program assembler 3, first combining unit 4, second combining unit 5, resolution engine 6, an operator unit 7 and a public body unit 8. The system may include only input and output interfaces for these components. Instead of the data source for public information 2, the operator unit 7 and/or the public body unit 8, the system may include input and output interfaces for these components.

The agent unit 1 can be a mobile entity, e.g., a drone, equipped with a range of subcomponents, all being provided by the agent's manufacturer. Here, the subcomponent 1a) includes all sensors and related processing units the agent unit 1 is equipped with. Common examples include cameras, inertial measurement units and global navigation satellite system receivers as well as algorithms that are deployed to aid in perceiving complex properties of the agent and its environment. Subcomponent 1b) contains the agent's routing and motion generation abilities. Thereby, the agent unit 1 is equipped with the required technology to determine a trajectory from its current location to the next target. How the route is calculated in detail by the agent unit 1 is not relevant for the system. Instead, only a spatio-temporal representation of the intended route, and the uncertainty along the way is required to be passed on to the next component. Finally, subcomponent 1c) specifies the agent unit 1 and its hardware components, e.g., the type of drone, its weight, battery capacity, drainage (discharge rate), maximum acceleration, noise emission. The agent unit 1 passes information obtained from the subcomponents to the logic program assembler 3.

Alternatively, the agent unit 1 may be an input/output device (e.g., smartphone or tablet) that is used by the pilot of the mobile entity (e.g., the drone), that stores the information of the subcomponents, that comprises the subcomponent 1b) and/or that retrieves at least some of the information from the mobile entity comprising at least subcomponent 1a). In addition or alternatively, the input/output device can provide a graphical user interface to input the target location of the mobile entity, the mission and/or a query on the mission (e.g., pilot wants to check if he is allows to operate the mobile entity or if the target location is reachable), wherein the entered information is transferred from the input/output device to the logic program assembler 3 or to the mobile entity, which passes the information obtained from the input/output device to the logic program assembler 3.

The data source for public information 2 is a source for data about the environment, including e.g., weather conditions, geographic and topological information. Public information can be temporally static data, such as road geometries and buildings, or dynamically changing over time like the current air humidity level. It is important to note that this data source is not expressing rules directly. As an example, instead of containing an explicit no-flight-zone, only geographic boundaries and other identifying data is contained within the public information. Only by applying rules later expressed by, e.g., the public body, a no-flight-zone for the individual agent would be inferred. The data source for public information 2 can be a server accessible via the Internet. Public information can be assembled from the governing public body and passed to or retrieved by the agent unit 1 and the logic program assembler 3.

The logic program assembler 3 encompasses all steps required to transform the given data from public and agent provided sources into a human-readable, probabilistic logic program. Hereby, all information on the environment, agent state and intended trajectory are lifted into a symbolic, probabilistic representation. This means that facts, whether boolean, discrete or continuous, are extracted from the incoming messages and given a systematically chosen name within the logic program. As an example, from a given trajectory decided by the agent unit 1, the travel time in seconds and length in meters can be computed and appended to the knowledge base. Similarly, weather data, geometric areas, the location and movements of crowds picked up by the sensors of the agent unit 1 and so on can be represented. The Probabilistic Environment Representation, Policy Parameter Extraction and State Transition Prediction blocks are converted with translating environmental, trajectory and agent specific data respectively. From all three, the final logic program is assembled and sent to the first combining unit 4, which handles the public body representation. To automatically construct a probabilistic logic program from various sources of information, it is necessary to distinguish what types of information are available. As an example, Boolean data, i.e., values that are assigned to be either true or false, merely needs a name to be introduced into the knowledge base. On the other hand, data-structures that are more complex require an individual information-extraction method. For example, to determine the distance or time of flight of a planned trajectory, geometric computations on the provided lines or curves through space have to be conducted. For such parameter extraction to occur, the data retrieved from the agent unit 1 and the data source 2 has to either conform to an expected structure or be accompanied by appropriate custom methods, e.g., provided by the manufacturer.

In the first combining unit 4, knowledge of the public body (mostly of regulatory nature) is received from the public body unit 8 and fused with the logic program obtained from the logic program assembler 3 and sent to the second combining unit 5. More specifically, a logic program is generated based on public body rules and regulations, e.g., representing laws as included in U-Space, and augment the existing logic program. The system shall make sure that the information referenced within public body rules is available from previous stages, which is required to check the fulfillment of public body requirements and rules. Within the public body rules, a trajectory validity clause needs to be defined with a name known by the downstream components to ensure that they can be incorporated into automatic mission clearance checks. When this part of the logic program is predefined by the public body unit 8, no manual intervention is required to enforce these rules on site.

The second combining unit 5 is analogous to the first combining unit 4 in that the operator's individual symbols, rules and requirements provided by the operator unit 7 are attached to the logic program received from the first combining unit 4. At this stage, operators can request for mission analysis, i.e., queries for information contained or inferable from the knowledge base, can be received from the operator unit 7 and added. Note that, in contrast to a pilot, the operator is not directly maneuvering the agent unit 1. Instead, operators define missions and oversee the ongoing process. At this stage, the logic program representing all available knowledge and requirements is complete and send to the resolution engine 6.

Since all knowledge and rules is represented as a logic program, queries, both automatic and manually triggered by the operator, can be responded to. The arriving logic program is therefore passed into the resolution engine, i.e., a software that answers (probabilistic) logic queries and assigns the query a numeric value. Within the context of probabilistic logic, this value represents how probable a query is true. As an example, a query on the mission validity given all the available information, public rules and operator preferences could result in an exemplary value of 0.8, meaning high probability of validity. Finally, the resolution algorithm's output is passed on to the component which started the query or where access to the stream of answered queries was requested, i.e., the public body, operator, pilot or mobile entity (agent unit) itself.

The operator is an individual or organization that has oversight and authority over the mission, its design and ongoing progress. To enforce the operator's individual rules, knowledge and requirements are passed by the operator unit 7 as logic program on to the second combining unit 5. There, the will of the operator is enforced by augmenting the compiled knowledge base and influencing resolution downstream.

The public body is the organ which (possibly decides and) is responsible for traffic participants to follow a set of rules and operate within predefined requirements. Similarly to the operator unit 7, the public body unit 8 encodes knowledge and rules as logic program which is passed on to the first combining unit 4. There, the will of the public body is enforced by augmenting the compiled knowledge base and influencing resolution downstream.

The agent unit 1, the operator unit 7 and/or the public body unit 8 can comprise a user interface to set a query or a set of queries and to output the answer. Alternatively or in addition, the queries can be set automatically based on certain factors, parameters or algorithms and/or the resolution algorithm's output can be further processed/analyzed to output a control or warning signal (e.g., continuous solving of similar questions until limit exceedance), to make classifications (e.g., clearance or no clearance) and/or to optimize a mission design (e.g., using the queries to skillfully improve specific aspects of the mission (both offline and online). The system can operate offline (e.g., before the actual mission) or online (e.g., during the mission). At least the logic program assembler 3, the first combining unit 4, second combining unit 5 and the resolution engine 6 may be formed by a data processing device (e.g., computer) and/or can be part of a device (mobile entity), e.g., the agent unit 1.

To provide an application example for the system, consider a pilot intends to test a new unmanned aerial vehicle (UAV) by flying on a nearby field, i.e., the mission is a test flight. UAV and pilot are registered and before take-off, the pilot wants to check if he is allowed to operate the UAV. First, the pilot is concerned about the risk of the UAV crashing which is why he prefers to have a minimum battery charge of 25 percent throughout the whole flight. An exception presents the availability of an emergency landing site, which is nearby. Second, the system is aware of background knowledge. This includes knowledge from the manufacturer that provides the system with Global Navigation Satellite System (GNSS) based localization, a shortest-path planner and a battery discharge rate. Furthermore, the pilot is untrained and has no exact knowledge of flight regulations or UAV classifications. Around the starting zone, there is an emergency landing in north-east direction and a no-flight-zone in north-west direction. In this example, the logic program is assembled in the following way.

First, data on registration and UAV is obtained from the agent unit 1 and loaded by the logic program assembler 3:

| | |
|---|---|
| 1 | pilot ( turing ). |
| 2 | did_online_training ( turing ). |
| 3 | drone ( uav2021 ). |
| 4 | weight ( uav2021 ) ~ normal ( 240 , 5 ). |
| 5 | charge_per_km (uav2021) ~ normal ( 0.05 , 0.01). |

Second, public regulation data is obtained from the public body unit 8 and loaded by the first combining unit 4:

| | |
|---|---|
| 1 | is_A1_flight (P, D ) :- did_online_training ( P ), drone ( D), weight ( D ) < 250. |

Third, the pilot's preferences with regard to the battery are obtained from the operator unit 7 and attached to the knowledge base by the first combining unit 4:

| | | |
|---|---|---|
| 1 | could_emergency_land ( D, X, Y) :- | |
| 2 | | B is initial_charge ( D ), |
| 3 | | C is charge_cost ( D, X, Y), |
| 4 | | E is cost_to_emergency_site ( D, X, Y), |
| 5 | o=<B+C+E. | |

| | |
|---|---|
| 1 | enough_charge_left (D, X, Y) :- |
| 2 | B is initial_charge ( D ), |
| 3 | C is charge_cost ( D, X, Y), |
| 4 | 25= <B+C. |

With this data being setup, the pilot can now run queries on the system. First, the pilot wants to know whether it is possible to start under A1 flight conditions (e.g., with a UAV class co), which checks compliance with public regulations:
1 query ( is_A1_flight ( turing , drone ).

Consider that a probability of 0.9 is returned which is due the UAV's weight. More specifically, since the weight of the UAV is close to the limit of a co UAV flight, the probability of starting under A1 flight conditions is less than 100 percent. Next, the pilot selects a preferred target location and checks if it is reachable given its assuming a specific trajectory:
1 query ( is_valid ( turing , drone , location , target_location , trajectory) ).

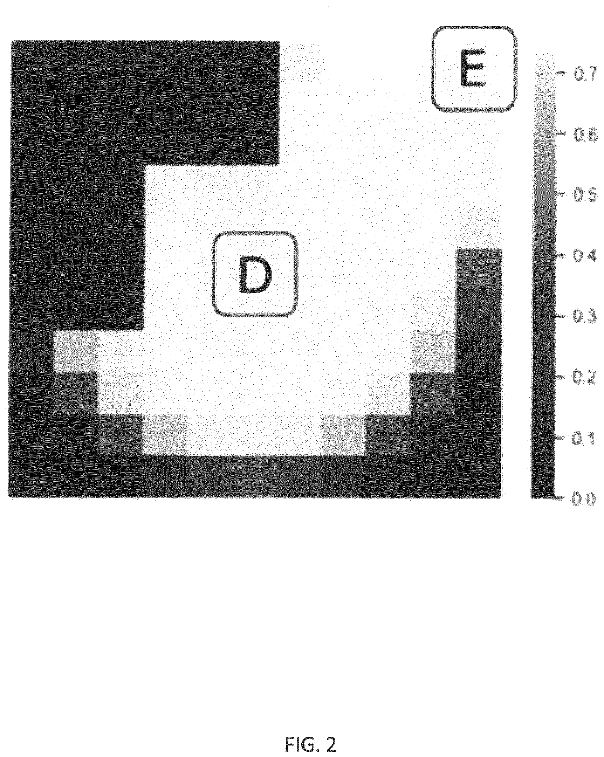

A probability of 0 is returned, since the selected target location is within a no-flight-zone. To pick a new, valid target location, the query is run on the nearby environment, and a map of valid targets returned. More specifically, this means that in this case, multiple queries are performed with mission conditions such as the starting location being fixed, while the target position is varied throughout the queries. As stated above, a shortest-path planner is used determining how to reach the target. Fig. 2 shows the resulting landscape for a UAV that is located in position D while an emergency site is located at position E. Furthermore, the no-flight zone on the top left can also be seen, resulting of a likelihood of 0.

This example gives a brief overview of how the system could be realized and used. The example shows that the system can be used for both single queries and batch queries that lead to either single values in form of a probabilistic value or lead to multiple values. Note that the visualization in form of a landscape is possible since the variation of the queries refers to a two or three-dimensional target position. However, in the same way, arbitrary other alterations, e.g., of time (samples of continuous parameters) or of certain licenses, can be performed. In the case of time, this may help to find suitable starting time that sufficiently meets all requirements, preferences or rules. This also means that the system is able to give suggestions, e.g., wait for 20 minutes. Considering this example, the following ways of using the system can be further derived:
- Question - answer: Basic single queries,
- Clearance: Single queries prior to a mission,
- Warning: Continuous solving of similar questions until limit exceedance, and
- Mission design and optimization: Using the queries to skillfully improve specific aspects of the mission (both offline and online).

The queries about the mission can be made by different users (the public body, operator, pilot and/or mobile entity). For example, mission queries may be automatically generated by the mobile entity during the mission and/or the mobile unit may perform trajectory optimization and/or route planning based on the response(s).

The system of the present invention applies probabilistic logic with input/output interfaces for users (pilot, public body and operator), the mobile entity, public databases and different representation stages for the usability and flexibility in the context of mission design. In this context, the present invention provides a core technology as well as a framework that defines what data is used and how the data are exchanged.

Previous explanations mostly cover the field of urban air mobility and suggest, e.g., the automatization of a u-space service. The following list shows three exemplary areas of application in which the system can be exploited as well.
- Gardening robotics: E.g., solving the question of what to mow depending on landscape and preference,
- Boats: Consideration of Nautic rules and detailed landscape consideration (e.g., for sail-boats),
- Vehicle: Explanation of self-driving vehicle parameters and transparent consideration of user preferences while obeying rules.

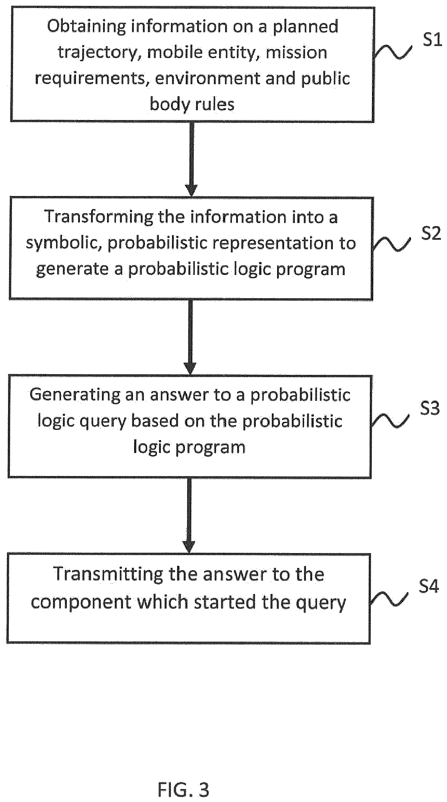

FIG. 3 shows a simplified flow chart of the inventive method. In a first step S1 the system obtains information on a planned trajectory, the mobile entity, mission requirements, environment and public body rules and transforms the information into a symbolic, probabilistic representation to generate a probabilistic logic program in step S2. In step S3, an answer to a probabilistic logic query is generated based on the probabilistic logic program and in step S4 the answer is transmitted to the component which started the query.

Below, foundational knowledge to understand the method and its context is presented. At first, the field of navigation will be discussed to understand how a mission's environment and the entities moving within it can be represented and understood. Thereafter, probabilistic inference as a mathematical framework as well as commonly used graphical models will be shown. Finally, a logic section will give insight into both propositional and first-order logic and their application in the field of logic programming.

At its core, navigation is about the search of a path through an environment for which spatial, temporal and categorical data is available. Based on the description of the static and dynamic surrounding entities either from an agent's own perception, through shared or prerecorded maps, collision free trajectories have to be found. Hereby, depending on the mode of mobility and the ruling body, laws need to be followed and precautions for safe movement have to be made based on the available data and meta information. As an example, besides avoiding the physical boundaries of objects in the environment, UAVs need to make sure to stay within their respective airspace, which depends on their classification and the operator's license.

To tackle this search problem we need to make use of appropriate representations through which we can access and update our belief in the state of the navigation space. This is where geographical information systems (GIS) come into play. They enable systematic storage and access of geometric and topological data, e.g. lines, curves and areas, usually referenced within the global frame. Besides their application in analyzing communities in social and health aspects, they are critical to enable autonomous agents to navigate outdoor environments.

One of the largest GIS projects today is OpenStreetMap (OSM). As a crowd sourced, publicly available alternative to proprietary databases, OSM has grown steadily, both in size and popularity, since its inception in the year 2004. To access OSM data, Overpass can be used to query information based on its own query language. When compared to proprietary alternatives, OSM has been found to be comparable in completeness and accuracy, although mapping public spaces with frequent changes over the years is an open and challenging task. Still, since OSM data is crowd sourced, precautions need to be taken when working with the possibly incomplete, inaccurate or outdated representation of the environment. For further geographic analysis, e.g., whether a trajectory would cross an area or at what distance it passes by, specialized database management systems have emerged to efficiently handle such queries.

After diving into the foundations of navigation, logic and probabilistic inference, the method of probabilistic mission design and how to generate probabilistic mission landscapes is presented. First, the requirements of novel traffic management systems and modes of mobility, as well as how they motivate using probabilistic logic programming for tackling mission design, are discussed. Hereafter, a system architecture that employs probabilistic logic programming and its individual components get shown. Finally, implementation details and the creation of probabilistic mission landscapes for mission clearance, analysis and optimization are presented. Probabilistic inference can be enabled by a range of models. Likewise, the way what data can flow in what directions between an autonomous agent and other traffic participants needs to be defined in order to implement a system for probabilistic mission design applications. For a world in which many modes of mobility are available to us, looking at a single one of them is not enough to make an informed choice on the system requirements. The same goes for the stakeholders that are directly or indirectly involved in the mission's execution. Identifying common stakeholders, the knowledge they can add to the mission design problem and the interface we need to utilize and enable their input is crucial.

Therefore, the following sections aim at discussing the common requirements of different modes of mobility and the most critical stakeholders to conclude with informed decisions on the desired qualities of the system architecture. Based on these requirements, arguments for the chosen model from the field of statistical relational AI will be presented.

Today, many modes of mobility are available when designing an autonomous system. Three common examples for autonomous agents in ground, air and water surface applications can be outlined as follows.
- Ground mobility lets an agent traverse the ground's surface with 2 degrees of freedom. Since most ground based robots are propelled using wheels, a planned trajectory can become uncertain in its execution given that the floor is uneven or wet from rain. While many obstacles on the ground are static, e.g. trees and houses, it is the same space as humans and many animals inhabit. With humans usually unable to directly inform the robot about their intended path, probabilistic representations of the living inhabitants motion is required. Moreover, boundaries of entities in the environment are, if not recorded with highly expensive sensory equipment, uncertain. Therefore, when planning a mission, geometric considerations of distances between the planned trajectory and static objects should reflect the uncertainties in the map.
- Water surface mobility, especially in the case of sail-drones, depends strongly on the environment in how accurately a planned trajectory can be followed or if a target location is at all reachable. While, at least in calm waters, the agent can rely on a flat plane to navigate on, waves and storms can become serious dangers to a mission's success. Although other traffic participants can be expected to send their location and travel direction via AIS signals, weather fields can be hard to predict. On top of that, tracking of floating obstacles can become hard once waves impede the agents line of sight and thereby vision based localization. Finally, mapped objects like buoys have oftentimes highly uncertain locations since they are merely restricted to move within a circular environment.
- Aerial mobility, similarly to autonomous driving on the public road network, can be subject to strict legal restrictions in the available air spaces. While they do not encounter as many other inhabitants of their spaces, flying over crowds of people can be dangerous and is thereby oftentimes not allowed. Furthermore, the weather conditions need to be taken into account when planning a mission since wind, humidity and rain will alter the UAV's flight characteristics. Also, although a shoreline might be considered a sharp edge for a ground based robot, tides can cause dramatic and frequent changes to where the planable space of a water surface vehicle ends.

Since each mode of mobility inhabits vastly different spaces, we cannot easily expect a single planning approach to yield equally acceptable results for each mode. Instead, the first requirement of multimodal mobility is for each agent to be autonomous in the way they plan their trajectories. Nevertheless, for the planner to avoid collisions and illegal behavior, purely geographical data cannot be sufficient as basis for deciding trajectories. Instead, we need to incorporate models that represent the individual dynamics between the moving agent and its environment.

While an airborne drone will be affected by strong winds differently than a ground based car, the dynamics of the relevant environment features need to be considered as well. As an example, a tree will impose the same navigational restrictions to a car regardless of the wind conditions, but its branches might move. Therefore, the area the UAV needs to avoid will grow accordingly. Similarly, the location of a buoy on water is limited by the anchor's length and the direction of water and wind streams. Incorporating this knowledge can shape what would originally be a filled circular region into a two-dimensional probability distribution for the buoys location.

In summary, when considering multiple modes of mobility, it is important to use a model that is flexible in expressing uncertainties in categorical data, e.g. whether the ground will be wet or the view limited by fog, and geometric data, e.g. the location of an obstacle that is moving or impacted by the environment. From here on out we will see this as motivation to employ a probabilistic representation. Furthermore, in regard to the complex dynamics of motion within different environments, the system shall be able to represent and reason on both categorical and numeric data. Especially being able to reason on discrete as well as continuous random variables is key to express the whole field of navigation in an inference task. In the field of probabilistic inference, both probabilistic graphical models and probabilistic logic programming have experienced growing attention from researchers over the past years, aiming at hybridized methods, i.e. containing both continuous and discrete random variables. Going forward the discussion will focus on these two options.

A stakeholder is regarded to be a person or institution that is either invested in the missions success, has regulatory power or, in terms of advancing the autonomous agent's goal, useful knowledge. For multimodal mobility missions, based on this definition, one can recognize the following three stakeholders.
- The public body defines and regulates the traffic areas. Hereby, public bodies define classifications for the autonomous agents as well as categorizations for their operation. By doing so the public body is crucial for the model of the mission we need to develop in order to construct safe and sound, in terms of legal requirements, missions. Besides setting rules for public spaces, public bodies will oftentimes also publish data, e.g. on important infrastructure or spaces that shall not be entered by privately operated agents. As an example, the airspace around airports are usually restricted and therefore publicly announced.
- The operator owns the agent and sets the missions target. While their preferences cannot override the public body on public grounds, they can further restrict what a valid mission is by setting, e.g., risk averse rules or preferences. Since operators do not necessarily possess the engineering skills to manually program their requirements, intuitive interfaces are required.
- The manufacturer has the most in-depth knowledge about the agent and set it up with its sensory equipment and algorithms for detection, localization, tracking and so on. Thereby, a mission design system is required to incorporate the knowledge of the manufacturer, by proxy the knowledge of the agent itself, into the mission design process. As an example, given that a heavy drone is not allowed to fly over a crowd of bystanders, the drone itself can provide estimates of its weight and the location of people below.

Given these considerations, it is need to find a model for which it is easy to input each stakeholder's knowledge about the environment, agent, mission and laws. Furthermore, making them accessible and adaptable both in terms of inference and intuitive to nonexperts is important to unite thoughts coming from vastly different levels of experience and motivations. As an example, for operators and private pilots to accept a system that will impede their freedom of employing the autonomous system according to their will, these limitations imposed by laws or the manufacturer need to be transparently modeled. Finally, the system should be able to adapt to non-expert preferences, e.g. letting the operator define what a valid mission is from their perspective.

Given these considerations, the requirements are favorable towards hybrid probabilistic logic programs. Since they can not only open up probabilistic inference in worlds with both continuous and discrete random variables, but also be read in the form of simple propositions (transparency) and extended using the same, straight-forward way of modeling (adaptability) without requiring the use of machine learning techniques or expert input.

It is now decided on employing hybrid probabilistic logic programming to the mission design task. Now the task is to design a system architecture that incorporates the stakeholders and autonomous agent for both receiving knowledge about the scenario and returning inference results. The following system architecture takes agent-provided information such as planned routes, perception, and hardware specifications and interlaces it with public data, user preferences and public rules. More specifically, public rules, as provided by legislative frameworks as, e.g., U-Space, are connected to personal preferences in order to design, clear or analyze a mission. Thereby, the goal is to obtain a logically intuitive and transparent technical system that non-experts can utilize and adapt within the context of mission design problems. Since rules and preferences are provided as automatically evaluable logic programs, a central service or the agent itself can check for rule compliance and success probabilities without the need for operator interference. Here, agent is to be understood as a generalization over, e.g., unmanned aerial vehicles, automotive vehicles, vessels and indoor robots with and without the need for an operator.

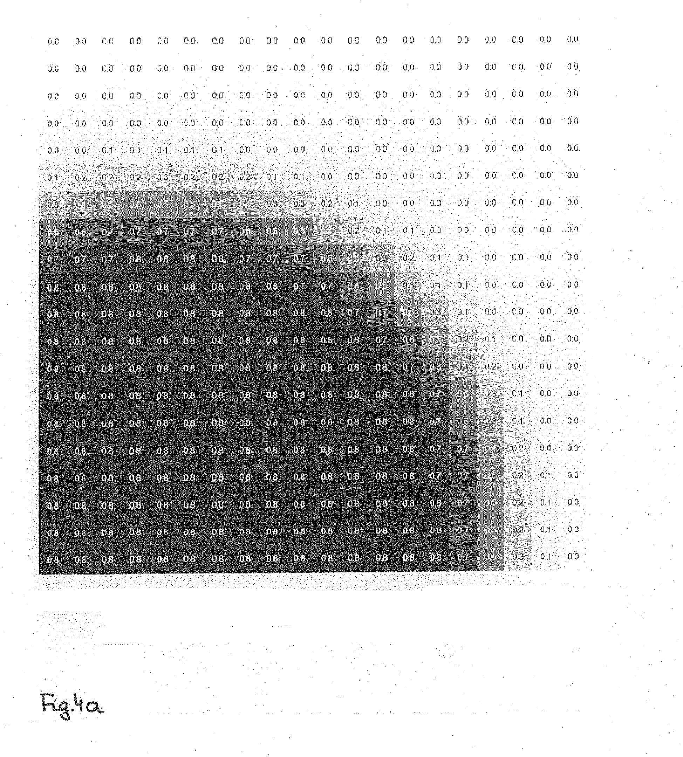

Fig. 4a shows a probabilistic landscape where an unmanned aerial vehicle (UAV) is supposed to start at the bottom left of the map. The landscape's highest probabilities stretch over the areas where the battery charge will most probably be high enough to return to the pilot.

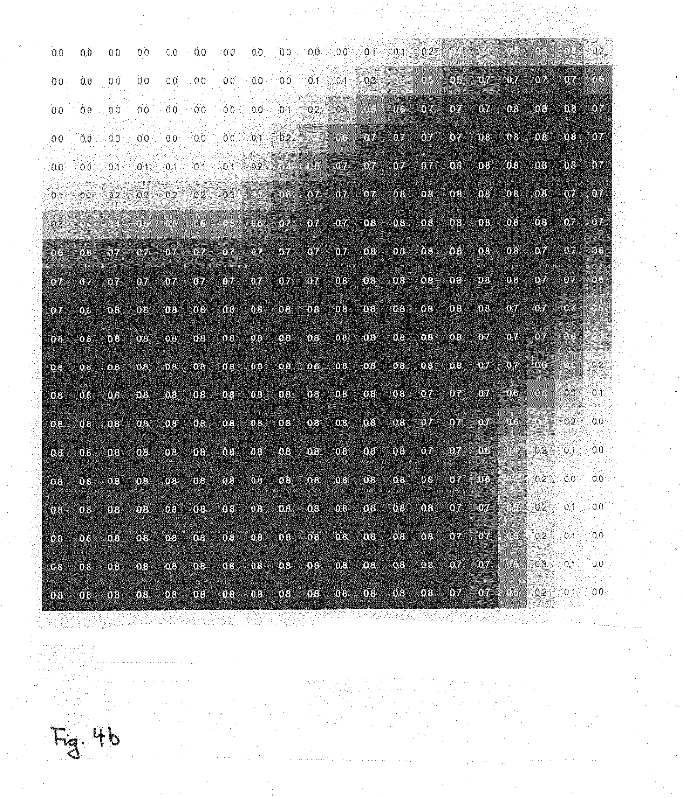

Fig. 4b shows a probabilistic landscape where a UAV can utilize an emergency landing site in the north-east. The landscape's extends north-east in comparison to Figure 4a since the model allows for low battery states at arrival if an emergency landing site is nearby.

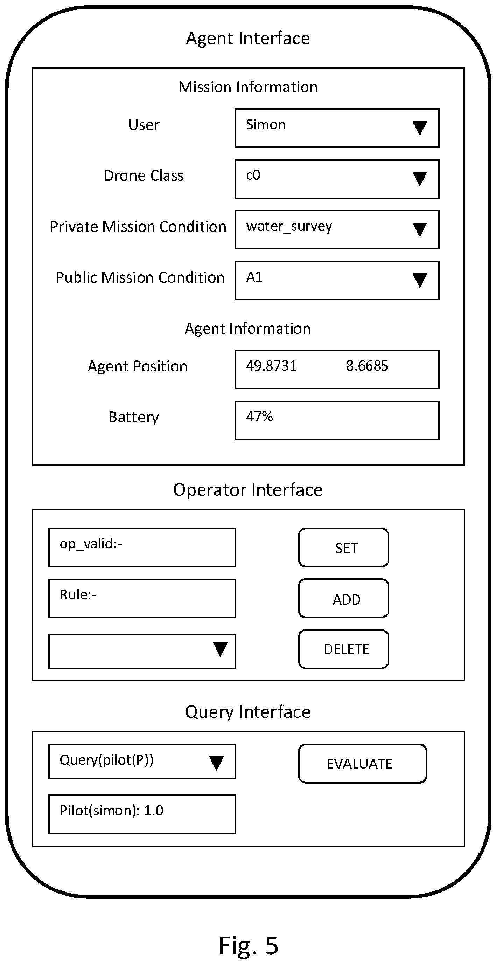

A graphical user interface (GUI) for probabilistic mission design is shown in Fig. 5, which can be provided by a portable device, such as a smartphone or tablet, which is available to an operator. The graphical user interface includes an input mask having an agent interface for entering/displaying mission and agent information, an operator interface for entering/displaying operator rules and mission requirements and a query interface for entering the probabilistic logic query on the mission and displaying the answer query.

With the agent interface, the operator selects user name, drone class, private mission condition and public mission condition each from a pre-defined condition set. In the field private mission condition, a "water_survey" is defined, for example, as a single rule (e.g., water_survey(...) :- over_water(...), camera_pointed_downwards(...), not_over_vessel(...), ...).). With the field public mission condition, it can be defined under which flight category (e.g., u-space A1 flight) the mission is conducted. The agent information about the current position and battery/charge status is obtained from the agent unit 1 (blocks 1a and 1c) and is displayed for information purposes only. In addition, a map can be displayed, in which the position of the agent (UAV), a mission area and, if necessary, invalid target locations are marked.

The GUI shown in Fig. 5 does not serve to display all available information. Instead, the GUI shows the most important/relevant information that is required in order to allow the operator/user to choose his queries. For example, if the GUI is designed for users with queries that rely on weather information, it is possible to display this as well.

The available information/data is organized via symbolic relationships and can be managed in various ways so that the user can access it. The simplest is to list the set of symbols statically in a datasheet that accompanies the mobile agent. It would also be possible to guide the usage of the mission design software by introducing auto-completion or by selecting mapped areas to reference their type (e.g., operator starts typing rule "valid_mission_area(location) :- over(" and clicks on a park-area of the displayed map to automatically finish the rule to be "valid_mission_area(location) :- over(location, park_area).").

Aspects of a possible implementation are:
- A graphical user interface is provided, allowing the operator to specify the agents starting position and area for which a probabilistic landscape shall be generated.
- The main part of the software is developed in the Python 3 programming language to handle user input, retrieve data from a server and generate the logic program.
- Problog 2 is chosen as hybrid probabilistic logic programming language to resolve mission clearance and analysis queries.
- A simplified model for UAVs in German public airspaces is provided alongside the implementation and loaded at start.
- Operator rules can be entered via the graphical user interface.

The presented method of probabilistic mission design using hybrid probabilistic logic programming is now valuated. For this purpose, data from Open Street Map (OSM) is used as geographical information systems (GIS) together with logic programs representing in part the laws of U-Space for unmanned aviation in Europe and exemplary operator rules.

This disclosure presented the method of probabilistic mission design, combining novel developments in autonomous traffic management and hybrid probabilistic logic programming. From the motivation of multimodal mobility applications, the diverse dynamics of ground, air and sea bound motion in uncertain environments and the need to open up control over navigation and mission design to non-experts, we have designed a system that gathers low-level information from agents and public databases to generate a knowledge base from which probabilistic inference can be performed. Since the symbolic nature of logic programs opens up opportunities to incorporate relational, publicly sourced geographic data, we were able to use OSM to seamlessly integrate. It was shown how logic programming enables non-experts to model both public law and private requirements onto the trajectory planning of an agent, leading to a probabilistic basis for mission clearance, analysis and optimization. Since a logic program encapsulates the human restrictions on missions and can automatically be run to draw probabilistic conclusion, human intervention is not required to impose laws and regulations.

Experiments have shown that sampling many geographic locations for their validity as mission targets is computationally expensive. With the model employed to render high resolution, probabilistic mission landscapes and comparing to lower resolution images shows the loss in accuracy, recall and precision. Sampling from random locations and generating a Voronoi diagram for tessellating the landscape surface has shown to be able to improve on the runtime while improving on the approximation quality.

## Claims

1. A method for evaluating a mission of a mobile entity, comprising the steps of:
obtaining (S1) information on a planned trajectory, the mobile entity, mission requirements, environment and public body rules;
transforming (S3) the information into a symbolic, probabilistic representation to generate a probabilistic logic program, wherein facts are extracted from the information and systematically designated with names within the probabilistic logic program;
obtaining at least one probabilistic logic query on the mission; and
generating (S3) an answer to the at least one probabilistic logic query based on the probabilistic logic program.

2. The method according to claim 1, wherein
the information on the planned trajectory and/or the mobile entity is obtained from an agent unit (1);
the information on the planned trajectory includes a spatio-temporal representation of the planned trajectory and/or information on an uncertainty along the planned trajectory; and
the information on the mobile entity includes hardware specification, sensor data and/or information on measurements made by the mobile entity.

3. The method according to claim 2, wherein
the at least one probabilistic logic query is obtained from the agent unit (1) and the answer is send to the agent unit (1).

4. The method according to any one of the preceding claims, wherein
the information on the environment is obtained from a source (2) for public information and includes weather conditions, geographic and/or topological information.

5. The method according to any one of the preceding claims, wherein
the information on the public body rules is obtained from a source (8) of information on rules set by a public body and includes legislative rules and/or regulations to be complied with.

6. The method according to any one of the preceding claims, wherein
the information on the mission requirements is obtained from an operator unit (7) and includes operator rules and mission requirements.

7. The method according to claim 6, wherein
the at least one probabilistic logic query is obtained from the operator unit (7) and the answer is send to the operator unit (7).

8. The method according to any one of the preceding claims, wherein
a first logic program is generated based on the information on the planned trajectory and the mobile entity;
a second logic program is generated on the information on the environment;
a third logic program is generated on the information on the mission requirements; and
the probabilistic logic program is generated by combining the first logic program, a second logic program und the third logic program.

9. A program that, when running on a computer or loaded onto a computer, causes the computer to execute the steps of the method according to any one of the preceding claims.

10. A system for evaluating a mission of a mobile entity, comprising
means for obtaining information on a planned trajectory, the mobile entity, mission requirements, environment and public body rules;
means (3..5) for transforming the information into a symbolic, probabilistic representation to generate a probabilistic logic program, wherein facts are extracted from the information and systematically designated with names within the probabilistic logic program, and the obtaining means is configured to obtain at least one probabilistic logic query on the mission; and
means (6) for generating an answer to the at least one probabilistic logic query based on the probabilistic logic program.

11. The system according to claim 10, wherein
the obtaining means comprises an agent unit (1) configured to provide the information on the planned trajectory and the mobile entity, to generate the at least one probabilistic logic query and to control the mobile entity based on the answer, and/or the obtaining means comprises an interface configured to receive the provided information and the at least one probabilistic logic query from the agent unit and to send the answer to the agent unit (1);
the information on the planned trajectory includes a spatio-temporal representation of the planned trajectory and/or information on an uncertainty along the planned trajectory; and
the information on the mobile entity includes hardware specification, sensor data and/or information on measurements made by the mobile entity.

12. The system according to claim 10 or 11, wherein
the obtaining means comprises a storage device (2) for storing the information on the environment and/or comprises an interface for receiving the information on the environment from the storage means (2); and
the information on the environment includes weather conditions, geographic and/or topological information.

13. The system according to any one of the preceding claims, wherein
the obtaining means comprises a storage means (7) for storing the information on the public body rules and/or comprises an interface for receiving the information on the public body rules (7); and
the information on the public body rules includes legislative rules and/or regulations to be complied with.

14. The system according to any one of the preceding claims, wherein
the obtaining means comprises an operator unit (7) configured to generate the information on the mission requirements and the at least one probabilistic logic query based on an operation of a user and to output the answer to the user, and/or comprises an interface to receive the generated information and the at least one probabilistic logic query from the operator unit (7) and to send the answer to the operator unit (7); and
the information on the mission requirements includes operator rules and mission requirements.

15. The system according to any one of the preceding claims, wherein
the transformation means (3..5) is configured to generate a logic program based on the information on the planned trajectory and the mobile entity and to attach the information on the environment and the information on the mission requirements to the logic program to generate the probabilistic logic program.
